# EUROPÄISCHE PATENTSCHRIFT

(11) **EP 4 237 119 B1**
(45) Veröffentlichungstag und Bekanntmachung des Hinweises auf die Patenterteilung: **21.08.2024**
(21) Anmeldenummer: 21802208.5
(22) Anmeldetag: 20.10.2021
(51) Int. Cl.: B01D 29/11, B01D 35/027, B01D 39/16

(54) **VERFAHREN UND VORRICHTUNG ZUM HERSTELLEN EINER FILTEREINRICHTUNG**
METHOD AND DEVICE FOR PRODUCING A FILTER DEVICE
PROCÉDÉ ET DISPOSITIF DE PRODUCTION D'UN DISPOSITIF DE FILTRAGE

(30) Priorität: 02.11.2020 DE 102020213744; 19.10.2021 DE 102021211780
(43) Veröffentlichungstag der Anmeldung: 06.09.2023
(73) Patentinhaber: Robert Bosch GmbH, 70442 Stuttgart (DE)
(72) Erfinder: CASTILLO RUEDA, Alberto, 28300 Aranjuez (ES); DUSAK, Richard, 37373 Libin (CZ); UHLIR, Zdenek, 67401 Trebic (CZ); MUELDNER, Jan, 37005 Ceske Budejovice 2 (CZ)
(86) Internationale Anmeldenummer: PCT/EP2021/079022
(87) Internationale Veröffentlichungsnummer: WO 2022/090007

(56) Entgegenhaltungen:
- WO-A1-2018/219549
- DE-A1- 102012 222 943
- DE-A1- 102013 001 843

## Beschreibung

Die Erfindung betrifft ein Verfahren zum Herstellen einer Filtereinrichtung zur Filterung einer hydrophilen Flüssigkeit, mit einem flächigen Filterelement, das für die Flüssigkeit durchlässig ist, wobei das Filterelement einen begrenzten Filterbereich aufweist, der mit einem hydrophoben Mittel beschichtet wird.

Weiterhin betrifft die Erfindung eine Vorrichtung zum Herstellen einer derartigen Filtereinrichtung.

### Stand der Technik

Verfahren und Vorrichtungen der eingangs genannten Art sind aus dem Stand der Technik bekannt. So offenbart die Offenlegungsschrift DE 10 2012 222 943 A1 ein Filterelement zur Filtrierung oder Filterung einer hydrophilen Flüssigkeit, das zumindest vor seiner ersten bestimmungsgemäßen Inbetriebnahme mindestens einen hydrophoben Filterbereich aufweist. Der hydrophobe Filterbereich in dem ansonsten hydrophilen Filterelement hat den Vorteil, dass bei einer Erstbefüllung eines das Filterelement aufweisenden Tanks, insbesondere mit einer wässrigen Harnstofflösung für die Abgasnachbehandlung, Luft aus der Filtereinrichtung entweichen kann. Der hydrophobe Filterbereich gewährleistet, dass zumindest für eine ausreichende Zeitdauer ein Durchgang für Luft geschaffen wird, sodass ein aktives Entfernen von Luftblasen aus der Filtereinrichtung nicht notwendig ist. Übliche Filtereinrichtungen umgeben in der Regel einen Filterraum, in welchen eine Ansaugstelle oder Absaugstelle mündet, um zu gewährleisten, dass nur gefiltertes Medium beziehungsweise gefilterte Flüssigkeit zu der Absaugstelle gelangt. Dadurch, dass der Filterraum geschlossen ist, kann Luft nur durch das Filterelement hindurch aus dem Filterraum entweichen. Durch die vorteilhafte Ausbildung wird der Luft gezielt ein Bereich zum Entweichen bereitgestellt, der einen vorteilhaften Einfüllvorgang insbesondere bei der Erstbefüllung des Tanks ermöglicht.

Um den hydrophoben Filterbereich auszubilden, wird in der genannten Druckschrift vorgeschlagen, auf diesen Filterbereich ein Epilamisierungsmittel aufzutragen.

### Offenbarung der Erfindung

Das erfindungsgemäße Verfahren mit den Merkmalen des Anspruchs 1 hat den Vorteil, dass der hydrophobe Filterbereich auf einfache und kostengünstige Art und Weise hergestellt wird und gleichzeitig eine sehr präzise Anordnung und Ausbildung des Filterbereichs erlaubt. Erfindungsgemäß ist hierzu vorgesehen, dass ein flächiges Filterelement bereitgestellt wird. Bei dem Filterelement handelt es sich insbesondere um ein Filtervlies, wie es bei bekannten Tankvorrichtungen, insbesondere für Abgasnachbehandlungsmittel, bereits eingesetzt wird. Vorzugsweise liegt das Filtervlies zwischen einer maschigen Stützlage und einer Spinnvlies. Die Stützlage dient insbesondere zur Formgebung des Filterelements, da das Filtervlies selbst kaum formstabil ist. Durch die Stützlage wird die Filtereinrichtung insgesamt formstabil gehalten. Die Spinnvlies gewährleistet, dass das Filterelement an der Stützlage anliegt und somit vorteilhaft den zuvor genannten Filterraum aufspannt beziehungsweise von dem übrigen Tankvolumen trennt. Weiterhin wird ein ringförmiger Grenzbereich für den Filterbereich in dem Filterelement hergestellt, in welchem das Material des Filterelements verdichtet ist. Durch das Verdichten in dem Grenzbereich wird der Filterbereich von dem übrigen Filterelement getrennt. Anschließend wird das hydrophobe Mittel auf den Filterbereich des Filterelements aufgebracht und die Filtereinrichtung erhalten. Durch den vorteilhaften Grenzbereich wird gewährleistet, dass das auf den Filterbereich aufgebrachte Mittel nicht den Grenzbereich durchdringt und in benachbarte Abschnitte oder Bereiche des Filterelements gelangen kann. Dadurch ist die hydrophobe Ausbildung des Filterelements auf den gewählten Filterbereich in vorteilhafter Weise begrenzt.

Gemäß einer bevorzugten Weiterbildung der Erfindung wird das Filterelement zwischen einem Stützelement und einem rohrförmigen Stempel verpresst, sodass sich der ringförmige Grenzbereich in dem Filterelement ergibt, in welchem das Material des Filterelements durch zusammenpressen verdichtet ist. Anschließend wird das hydrophobe Mittel auf den Filterbereich innerhalb des rohrförmigen Stempels aufgetragen. Durch das Verpressen des Filterelements zwischen dem rohrförmigen Stempel und dem Stützelement und der dadurch resultierenden ringförmigen Verpressung ergibt sich, dass das Mittel innerhalb des Filterbereichs in das unverpresste Filtermaterial des Filterelements eindringt und durch den verpressten Abschnitt des Filterelements nicht aus dem Filterbereich heraus in benachbarte Bereiche des Filterelements dringt. Dadurch wird das Mittel innerhalb des Filterbereichs gehalten und kann sich ausreichend in das Filtermaterial einwirken, um das Filterelement in dem Filterbereich hydrophob auszubilden. Ist ausreichend Mittel aufgetragen oder aufgebracht worden, wird die Verpressung gelöst, der Stempel von dem Stützelement entfernt und das Filterelement zum Erhalten der Filtereinrichtung entnommen. Ist das Filterelement bereits zwischen der Stützlage und der Spinnvlies während des Verpressens gehalten gewesen, so ist die Filtereinrichtung nunmehr fertiggestellt. Ist nur das Filterelement zwischen Stützelement und Stempel gelegt worden, so kann es nunmehr mit dem hydrophoben Mittel behandelte Filterelement zwischen Stützlage und Spinnvlies angeordnet und mit diesen verbunden werden.

Gemäß einer bevorzugten Weiterbildung der Erfindung wird der Grenzbereich zusätzlich oder alternativ zu dem Verpressen durch eine stoffschlüssige Verbindung, insbesondere durch eine Schweißverbindung, mehrerer Lagen des Filterelements, insbesondere des Filtervlieses mit der Stützlage und dem Spinnvlies, hergestellt. Durch die stoffschlüssige Verbindung wird das Filterelement in dem Grenzbereich ebenfalls derart verdichtet, dass ein Austreten von noch flüssigem hydrophobem Mittel aus dem eingegrenzten Filterbereich in benachbarte Bereiche des Filterelements verhindert wird. Hiermit ergeben sich auch hierdurch die zuvor genannten Vorteile.

Gemäß einer bevorzugten Ausführungsform der Erfindung wird die Verpressung nach dem Aufbringen des Mittels auf den Filterbereich für eine vorbestimmte Zeitdauer aufrechterhalten. Dadurch ist sichergestellt, dass sich das Mittel ausreichend weit in dem Filtermaterial verteilt und sich mit dem Filtermaterial dauerhaft verbindet, zumindest derart, dass sich das Mittel bei der Erstbefüllung des Tanks oder bei der Erstbenetzung des Filterelements mit der Flüssigkeit nicht sofort von dem Filterelement löst, sondern zumindest derart lange an dem Filterelement verbleibt, bis ausreichend Luft durch den Filterbereich des Filterelements entwichen ist.

Vorzugsweise wird das Filterelement zwischen dem Stützelement und dem rohrförmigen Stempel ringförmig verpresst, wie vorstehend bereits beschrieben. Durch die Ringform ergibt sich eine geschlossene Grenze für den Filterbereich, die die präzise Anordnung des Filterbereichs in dem Filterelement erlaubt. Die Ringform kann dabei kreisförmig, ovalförmig oder mehreckig ausgebildet sein.

Besonders bevorzugt wird als hydrophobes oder hydrophobierendes Mittel ein Epilamisierungsmittel verwendet. Hierdurch ergibt sich eine vorteilhafte hydrophobe Ausbildung des Filterbereichs. Insbesondere wird als Epilamisierungsmittel ein flüssiges, beispielsweise flüchtiges Lösungsmittel eingesetzt, in das ein fluoriertes Polymer (Fluorkunststoff) gelöst ist. Nach dem Auftragen auf den Filterbereich verflüchtigt sich dann insbesondere das Lösungsmittel und der Fluorkunststoff verbleibt auf der Oberfläche des Filtermaterials in dem Filterbereich, sodass in dem Filterbereich eine reduzierte Oberflächenspannung existiert, wodurch sich die hydrophobe Wirkung in dem begrenzten Filterbereich ergibt. Weiterhin ist bevorzugt vorgesehen, dass das Mittel mittels einer in den Stempel eingeführten Zuführleitung aufgebracht, insbesondere unter Druck aufgebracht wird, sodass das Mittel vorteilhaft schnell in das Filtermaterial des Filterelements eindringt.

Die erfindungsgemäße Vorrichtung mit den Merkmalen des Anspruchs 7 eignet sich insbesondere zur Durchführung des oben genannten Verfahrens. Dabei zeichnet sich die Vorrichtung durch eine Einrichtung zur Erzeugung eines ringförmigen, den Filterbereich umgebenden verdichteten Grenzbereichs sowie durch eine Vorrichtung zum Aufbringen des Mittels auf dem begrenzten Filterbereich aus. Durch die ringförmige Herstellung des Grenzbereichs durch die Einrichtung ist eine Umschließung und Abgrenzung des Filterbereichs, der hydrophob wirken soll, sicher gewährleistet. Durch die Vorrichtung wird das Mittel gezielt auf dem begrenzten Filterbereich aufgebracht, sodass sich die oben genannten Vorteile ergeben. Dabei zeichnet sich die Vorrichtung insbesondere durch ein Stützelement aus, auf welchem das Filterelement ablegbar ist, durch einen rohrförmigen Stempel, der dem Stützelement gegenüberliegend anordenbar ist, vorzugsweise auch durch eine Aktuatoreinrichtung zum Verpressen des Filterelements zwischen Stempel und Stützelement. Es ergeben sich dadurch die bereits genannten Vorteile.

Insbesondere ist das Stützelement eben ausgebildet, sodass das Filterelement auf dem Stützelement flächig aufliegen kann. Optional weist das Stützelement in dem Filterbereich beziehungsweise in dem Bereich, der innerhalb des Stempels liegt, eine Vertiefung auf, sodass das Mittel das Filterelement vollständig durchdringen, insbesondere auch eine Unterseite des Filterelements, die dann nicht auf dem Stützelement aufliegt, sondern sich über die Vertiefung hinweg erstreckt, benetzen kann. Weiterhin weist die Vorrichtung bevorzugt eine Druckeinrichtung zum Auftragen des Mittels, insbesondere zum Eintreiben des Mittels in das Filterelement auf. Bei der Druckeinrichtung handelt es sich beispielsweise um einen zweiten Stempel, dessen Außenkontur im Wesentlichen der Innenkontur des rohrförmigen Stempels entspricht, und der eine geschlossene Stirnfläche aufweist, um das aufgebrachte Mittel in das Filterelement einzutreiben. Alternativ handelt es sich bei der Druckeinrichtung um eine Fördereinrichtung, durch welche das Mittel mit einem ausreichend hohen Hydraulikdruck auf das Filterelement aufgebracht wird, sodass es auch in dieses eindringt.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: eine Tankvorrichtung mit einer vorteilhaften Filtereinrichtung in einer vereinfachten Seitenansicht,
- Figur 2: ein erstes Ausführungsbeispiel der Filtereinrichtung in einer vereinfachten Schnittdarstellung,
- Figuren 3A und 3B: ein zweites Ausführungsbeispiel der vorteilhaften Filtereinrichtung mit einer Vorrichtung zur Herstellung.
- Figur 4: ein weiteres Ausführungsbeispiel der Filtereinrichtung.

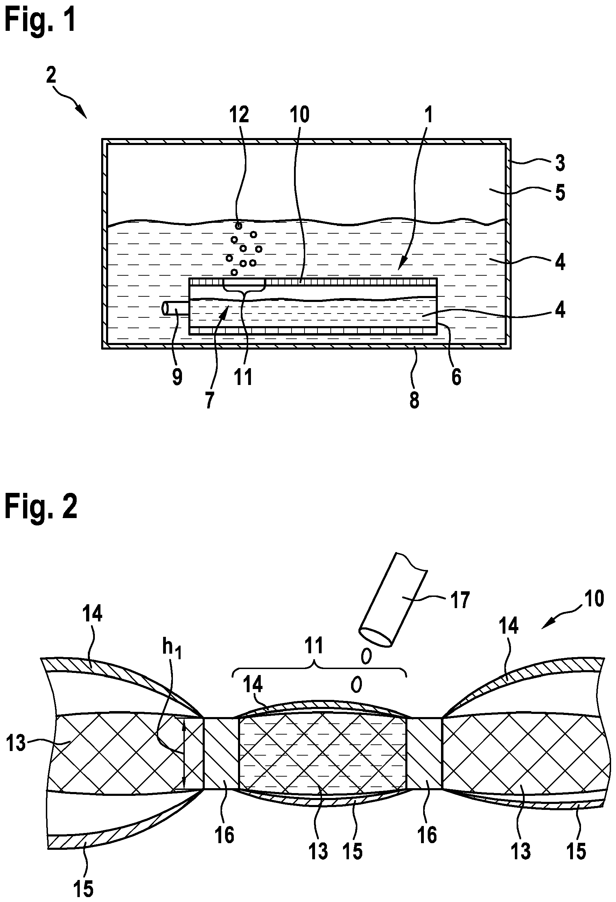

Figur 1 zeigt in einer vereinfachten Seitenansicht eine vorteilhafte Filtereinrichtung 1, die in einem Vorratsbehälter 2 einer Tankvorrichtung 3 angeordnet ist. In dem Vorratsbehälter 3 ist eine wässrige Harnstofflösung 4 gehalten, wobei die Harnstofflösung 4 nur einen Teil des Vorratsbehälters 2 ausfüllt, sodass oberhalb der flüssigen Harnstofflösung ein Raum 5 mit Luft verbleibt.

Die Filtereinrichtung 1 umschließt einen Raum 7 innerhalb des Vorratstanks 2 und ist nahe zu einem Boden 8 des Vorratsbehälters 2 angeordnet. Der Filtereinrichtung 1 ist außerdem ein Entnahmeanschluss 9 zugeordnet, der einendig in den Raum 7 mündet und anderendig mit einer Entnahmevorrichtung, beispielsweise einer Förderpumpe oder dergleichen, verbunden ist. Durch den Entnahmeanschluss 9 kann flüssiges Volumen des Abgasnachbehandlungsmittels beziehungsweise der wässrigen Harnstofflösung 4 aus dem Raum 7 entnommen werden. Die Filtereinrichtung 1 weist dabei beispielsweise ein Gehäuse 6 auf, an welchem der Entnahmeanschluss 9 sowie ein Filterelement 10 angeordnet sind, sodass das Gehäuse 6 und das Filterelement 10 den Raum 7 einschließen. Gemäß dem vorliegenden Ausführungsbeispiel bildet das Filterelement 10 den Deckenbereich des Gehäuses 6 beziehungsweise der Filtereinrichtung 1. Insbesondere ist das Filterelement 10 in einer Ebene aufgespannt an dem Gehäuse 6 gehalten.

Das Filterelement 10 ist im Wesentlichen für die Flüssigkeit, also die wässrige Harnstofflösung 4, durchlässig, also hydrophil, ausgebildet. Nur in einem Filterbereich 11 ist das Filterelement 10 hydrophob ausgebildet. Das hat den Vorteil, dass bei einem Befüllen des Vorratstanks 2 mit der Flüssigkeit 4 Luft aus der Filtereinrichtung 1 durch den hydrophoben Filterbereich 11 entweichen kann, wie durch Bläschen 12 in Figur 1 angezeigt, die durch den Filterbereich 11 nach oben schweben, während durch das übrige Filterelement 10 Flüssigkeit in die Filtereinrichtung 1, beziehungsweise in den Raum 7 der Filtereinrichtung 1 eindringen kann. Damit ist eine vollständige Auffüllung der Filtereinrichtung 1 mit der Flüssigkeit 4 gewährleistet, sodass auch ein Ansaugen von Flüssigkeit 4 aus der Filtereinrichtung 1 jederzeit durch den Entnahmeanschluss 9 gewährleistet ist.

Figur 2 zeigt in einer vergrößerten Schnittdarstellung das Filterelement 10 im Bereich des Filterbereichs 11. Das Filterelement 10 ist mehrlagig ausgebildet. Dazu weist das Filterelement 10 ein Filtervlies 13 auf, das zwischen einer maschenförmigen Stützlage 14 und einem Spinnvlies 15 liegt.

Zum Abgrenzen des Filterbereichs 11 von dem übrigen Filterelement 10 sind die verschiedenen Lagen 13, 14, 15 am Außenrand des Filterbereichs 11 stoffschlüssig miteinander verbunden, insbesondere verschweißt und/oder verklebt. Dadurch ergibt sich ein Grenzbereich 16, der sich insbesondere ringförmig um den Filterbereich 11 erstreckt und diesen somit außenseitig begrenzt. Der Grenzbereich 16 ist somit kreisringförmig, ovalförmig, mehreckförmig oder wahlweise als unregelmäßiger, jedenfalls geschlossener Linienbereich ausgebildet. Wird nunmehr das hydrophobe Mittel auf den Filterbereich 11 aufgebracht, beispielsweise mithilfe einer Zugangsleitung oder Zuführleitung 17, wie in Figur 2 angedeutet, so verbleibt das Mittel innerhalb des Filterbereichs 11 und gelangt nicht in danebenliegende Bereiche des Filterelements 10, insbesondere des Filtervlies 13. Dadurch ist sichergestellt, dass die hydrophobe Ausbildung des Filterelements 10 auf den gewünschten Filterbereich 11 begrenzt ist und bleibt. Insbesondere werden zur Herstellung des Grenzbereichs 16 die Lagen 13, 14, 15 zuvor miteinander verpresst, sodass die Gesamthöhe h₁ im Bereich des Grenzbereichs 16 des Filterelements 10 kleiner ist als im übrigen Bereich. Dadurch wird der Grenzbereich 16 verdichtet und die dadurch entstehende Dichtwirkung für einen Filterbereich 11 zu den benachbarten Abschnitten des Filterelements 10 verbessert.

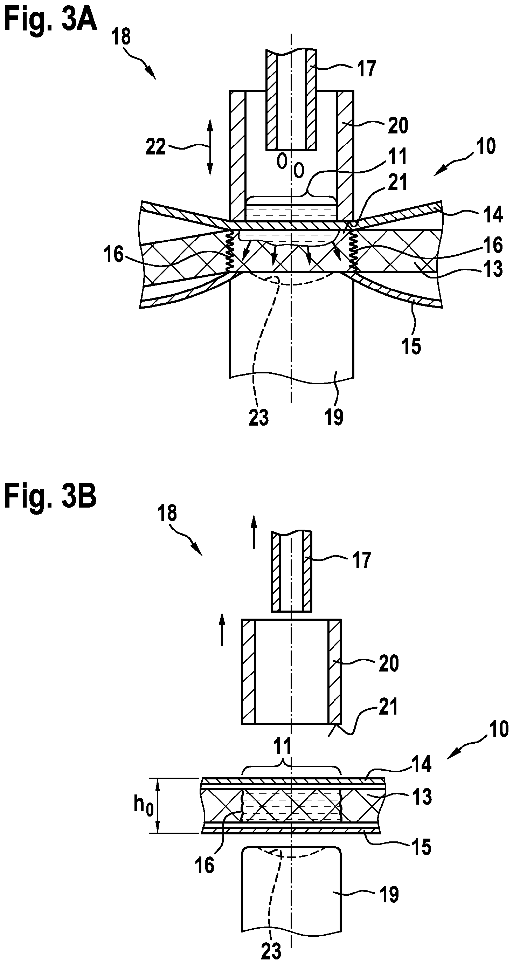

Figur 3 zeigt ein weiteres Ausführungsbeispiel des Filterelements 10 sowie dessen Herstellung, bei welchem auf eine stoffschlüssige Verbindung verzichtet wird.

Dazu wird eine vorteilhafte Vorrichtung 18 eingesetzt, die auch die Zuleitung 17 aufweist. Weiterhin weist die Vorrichtung 18 ein Stützelement 19 auf, auf welches das Filterelement 10 flächig auflegbar ist. Dem Stützelement 19 gegenüberliegend ist ein rohrförmiger Stempel 20 angeordnet, der stirnseitig dem Stützelement 19 zugewandt ist, sodass die ringförmige Stirnwand 21 des Stempels 20 dem Stützelement 19 gegenüberliegt. Dabei ist der Außendurchmesser des Stützelements 19 mindestens so groß wie der Außendurchmesser des Stempels 20. Der Stempel 20 und/oder das Stützelement 19 sind aufeinander zu und voneinander weg bewegbar, wie durch einen Doppelpfeil 22 in Figur 3A angezeigt, bewegbar. Zur Herstellung des Filterelements 10 wird dieses zwischen dem Stützelement 19 und dem Stempel 20 auf das Stützelement 19 aufgelegt. Anschließend wird es zwischen dem Stempel 20 und dem Stützelement 19 verpresst, indem beispielsweise der Stempel 20 auf das Stützelement 19 zubewegt wird, wie in Figur 3A gezeigt. Dabei werden die Lagen 13, 14, 15 des Filterelements 10 miteinander verpresst, und zwar insbesondere entlang der ringförmigen Stirnwand 21 des rohrförmigen Stempels 20. Dadurch ergibt sich ein ringförmiger Verpressungsbereich beziehungsweise der Grenzbereich 16 in dem Filterelement 10, durch welchen eine Abdichtung des innerhalb des rohrförmigen Stempels 20 liegenden Filterbereichs 11 zu den außerhalbliegenden Abschnitten des Filterelements 10 bewirkt wird. In dem verpressten Zustand wird nunmehr mittels der Zuführleitung 17 das hydrophobe Mittel, insbesondere die hydrophobe Flüssigkeit, in den Stempel 20 eingefüllt und damit auf das Filterelement 10 in dem Filterbereich 11 aufgetragen. Das hydrophobe Mittel dringt dabei in das Filterelement 10 im Filterbereich 11 ein, um die zuvor genannte Wirkung zu erzielen. Durch die Verpressung wird es daran gehindert, an angrenzende Bereiche des Filterelements 10 zu gelangen.

Nach einer vorgebbaren Zeitdauer werden der Stempel 20 und das Stützelement 19 wieder voneinander entfernt und dadurch das Filterelement 10 freigegeben, wie in Figur 3B gezeigt. Die Verpressung wird dabei aufgehoben, sodass auch die Abdichtung des Filterbereichs 11 zu den angrenzenden Bereichen des Filterelements 10 aufgehoben wird. Die Zeitdauer wird dabei derart gewählt, dass die Verpressung erst dann aufgehoben wird, wenn das hydrophobe Mittel getrocknet ist beziehungsweise das Filterelement 10 ausreichend benetzt und beschichtet hat.

Insbesondere wird als hydrophobes Mittel ein Epilamisierungsmittel verwendet, insbesondere ein flüchtiges Lösungsmittel, in das ein fluorisiertes Polymer (Fluorkunststoff) gelöst ist.

Wurden Stempel 20 und Stützelement 19 voneinander entfernt, ist das Filterelement 10 fertiggestellt und weist ein Filterbereich 11 auf, der zumindest bei einem ersten Befüllvorgang noch hydrophob wirkt und das Austreten von Luft aus der Filtereinrichtung 1, wie vorstehend bereits beschrieben, gewährleistet.

Das zuletzt beschriebene Herstellungsverfahren hat den Vorteil, dass im Unterschied zu dem vorhergehenden Herstellungsverfahren das Filterelement 10 insgesamt eben ausgebildet ist und insbesondere keine Verwendungsstelle mit reduzierter Höhe h aufweist. Vielmehr kehrt das Filterelement 10 nach dem Herstellungsvorgang des Filterbereichs 11 in seine Ausgangshöhe h₀ zurück, die im Vergleich zu der Höhe h₁ größer ist. Dadurch ergibt sich ein ebenes Filterelement 10, das vorteilhaft in die Tankvorrichtung 2 integrierbar ist.

Optional weist das Stützelement 19 außerdem eine Vertiefung 23 im Bereich des Filterbereichs 11 auf, sodass das hydrophobe Mittel auch die Rückseite oder Unterseite des Filterelements 10 benetzen kann.

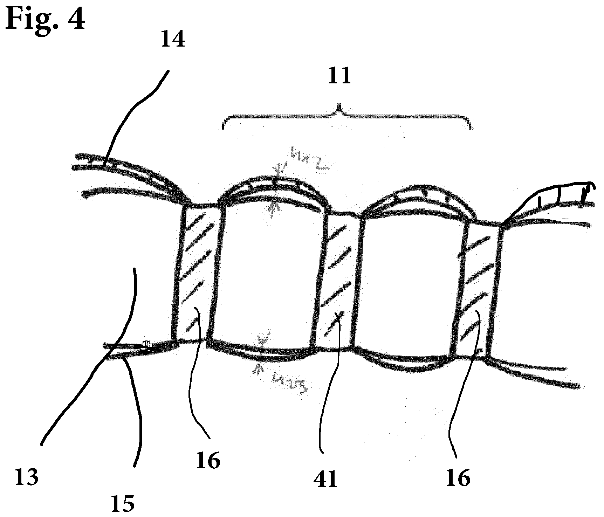

Figur 4 zeigt in einer vergrößerten Schnittdarstellung das Filterelement 10 im Bereich des Filterbereichs 11 in einer alternativen Ausführungsform. Das Filterelement 10 ist analog zur Ausführungsform nach Figur 2 mehrlagig ausgebildet. Dazu weist das Filterelement 10 ein Filtervlies 13 auf, das zwischen einer maschenförmigen Stützlage 14 und einem Spinnvlies 15 liegt. Ebenso ist ein Grenzbereich 16 vorgesehen. Zusätzlich zur Ausführungsform nach Figur 2 ist ein weiterer Verdichtungsbereich 41, insbesondere ein punktförmiger, im wesentlichen mittig angeordneter Verdichtungsbereich, vorgesehen, welcher von dem Grenzbereich 16 umschlossen wird. Der Verdichtungsbereich 41 dient dazu, bei einer gegebenen lateralen Erstreckung des Filterbereichs 11 die verschiedenen Lagen, hier also Filtervlies, Stützlage und Spinnvlies, so nah zusammenzubringen, daß eine maximale Höhe h12 eines Freiraums im Filterbereich 11 zwischen der Stützlage 14 und dem Filtervlies 13 und/oder eine maximale Höhe h23 eines Freiraums im Filterbereich 11 zwischen dem Filtervlies 13 und dem Spinnvlies 15 vorzugsweise in einem Bereich zwischen 0 Millimetern und 0,8 Millimetern liegen und äußerst vorzugsweise zirka 0,6 Millimeter betragen. Dies insbesondere bei einem Filterbereich 11, der einen durchschnittlichen Durchmesser von zirka 1 Zentimeter aufweist. Gut geeignet hierfür ist insbesondere eine punktförmige Ausgestaltung des weiteren Verdichtungsbereichs 41 mit einem Durchmesser von zirka 4 Millimetern. Dadurch, also durch eine hergestellte hinreichende Nähe der drei Schichten 14, 13 und 15 zueinander im Bereich des Filterbereichs 11, kann sichergestellt werden, daß alle drei Schichten 14, 13 und 15 mit dem Epilamisierungsmittel gesättigt und somit imprägniert werden können, wenn das Epilamisierungsmittel von einer Seite aufgebracht wird. Die hinreichende Nähe der drei Schichten zueinander gewährleistet einen hinreichend guten Übertritt bzw. Durchtritt des Epilamisierungsmittels durch alle drei Schichten hindurch im Bereich des Filterbereichs 11 und gewährleistet damit das Eintreten der gewünschten Wirkung, nämlich einer Hydrophobisierung im Filterbereich 11 durch alle drei Schichten hindurch, durch die bei Erstinbetriebnahme der Filtereinrichtung im Filterbereich 11 zuverlässig Luft hindurchtreten können soll.

Auch der weitere Verdichtungsbereich 41 kann analog zur Beschreibung im Zusammenhang mit dem Grenzbereich 16, wie er in den Figuren 1 bis 3 bereits beschrieben ist, nur während des Herstellungsprozesses, also bis zum Abschluß der Imprägnierung/Epilamisierung bestehen oder aber permanent in das Material eingebracht werden. Letzteres kann auf mechanischem Wege, gegebenenfalls unter Wärmeeinwirkung, auf chemischem Wege bzw. durch einen Schweißprozeß bewerkstelligt werden.

## Patentansprüche

1. Verfahren zum Herstellen einer Filtereinrichtung (1) zur Filterung einer hydrophilen Flüssigkeit, mit einem flächigen Filterelement (10), das für Flüssigkeit durchlässig ist, wobei das Filterelement (10) einen begrenzten Filterbereich (11) aufweist, der mit einem hydrophoben Mittel beschichtet wird, umfassend folgende Schritte:
a) Bereitstellen des flächigen Filterelements (10), das insbesondere ein zwischen einer maschigen Stützlage (14) und einer Spinnvlies (15) liegendes Filtervlies (13) aufweist,
b) Herstellen eines ringförmigen, verdichteten Grenzbereichs (16) für den Filterbereich (11),
c) Aufbringen des Mittels auf den Filterbereich (11) des Filterelements (10),
d) Erhalten der Filtereinrichtung (1).

2. Verfahren nach Anspruch 1, **dadurch gekennzeichnet, dass** der Grenzbereich (16) durch ein Verpressen des Filterelements (10) zwischen einem Stützelement (19) und einem rohrförmigen Stempel (20) herstellt wird, und dass das Mittel im verpressten Zustand auf das Filterelement (10) aufgebracht wird.

3. Verfahren nach einem der vorhergehenden Ansprüche, **dadurch gekennzeichnet, dass** der Grenzbereich (16) durch eine stoffschlüssige Verbindung, insbesondere Schweißverbindung, mehrerer Lagen des Filterelements (10) miteinander hergestellt wird.

4. Verfahren nach einem der vorhergehenden Ansprüche, **dadurch gekennzeichnet, dass** die Verpressung nach dem Einbringen des Mittels für eine vorbestimmte Zeitdauer aufrechterhalten wird.

5. Verfahren nach Anspruch 2 **dadurch gekennzeichnet, dass** das Filterelement (10) zwischen dem Stützelement (19) und dem rohrförmigen Stempel (20) ringförmig verpresst wird.

6. Verfahren nach einem der vorhergehenden Ansprüche, **dadurch gekennzeichnet, dass** als Mittel ein Epilamisierungsmittel verwendet wird.

7. Verfahren nach einem der vorhergehenden Ansprüche, **dadurch gekennzeichnet, daß** im Filterbereich (11) ein Verdichtungsbereich (41), insbesondere ein punktförmiger, im wesentlichen mittig angeordneter Verdichtungsbereich, hergestellt wird, welcher von dem Grenzbereich (16) umschlossen wird, so daß beim Aufbringen des hydrophoben Mittels infolge einer hinreichenden Nähe des Filtervlieses (13) zur Stützlage (14) einerseits und zum Spinnvlies (15) andererseits das Mittel sowohl das Filtervlies als auch die Stützlage als auch das Spinnvlies hydrophobieren kann.

8. Verfahren nach einem der vorhergehenden Ansprüche, **dadurch gekennzeichnet, daß** eine maximale Höhe (h12) eines Freiraums im Filterbereich (11) zwischen der Stützlage (14) und dem Filtervlies (13) und/oder eine maximale Höhe (h23) eines Freiraums im Filterbereich zwischen dem Filtervlies (13) und dem Spinnvlies (15) in einem Bereich zwischen 0 Millimetern und 0,8 Millimetern liegen und vorzugsweise zirka 0,6 Millimeter betragen.

9. Vorrichtung (18) zum Herstellen einer Filtereinrichtung (1) zur Filterung einer hydrophilen Flüssigkeit, wobei die Filtereinrichtung (1) ein flächiges Filterelement (10), das für Flüssigkeit durchlässig ist, aufweist, wobei das Filterelement (10) in einem begrenzten Filterbereich (11) mit einem hydrophoben Mittel versehen ist, **gekennzeichnet durch** eine Einrichtung zur Erzeugung eines ringförmigen, den Filterbereich (11) umgebenden , verdichteten Grenzbereichs (16), sowie durch eine Vorrichtung zum Aufbringen des Mittels auf den begrenzen Filterbereich (11).

10. Vorrichtung nach Anspruch 9, **dadurch gekennzeichnet, dass** die Einrichtung einen rohrförmigen Stempel (20) und ein Stützelement (19) aufweist, zwischen welchen das Filterelement (10) anordenbar und durch Stempel (20) und Stützelement (19) zur Herstellung des Grenzbereichs (16) verpressbar ist.

11. Vorrichtung nach einem der Ansprüche 9 oder 10, **dadurch gekennzeichnet, dass** die Einrichtung zur Herstellung einer stoffschlüssigen, sich ringförmig um den Filterbereich (11) erstreckenden Verbindung, insbesondere Schweißverbindung, ausgebildet ist.

12. Vorrichtung nach Anspruch 10 **dadurch gekennzeichnet, dass** das Stützelement (19) eben ausgebildet ist oder im Bereich des Filterbereichs (11) eine Vertiefung (23) aufweist.

## Claims

1. Method for producing a filter device (1) for filtering a hydrophilic liquid, having a planar filter element (10) which is permeable to liquid, wherein the filter element (10) has a delimited filter region (11) which is coated with a hydrophobic agent, comprising the following steps:
a) providing the planar filter element (10), which in particular has a non-woven filter fabric (13) which lies between a meshed supporting layer (14) and a spun-bonded non-woven fabric (15);
b) producing an annular compacted boundary region (16) for the filter region (11);
c) applying the agent to the filter region (11) of the filter element (10);
d) obtaining the filter device (1).

2. Method according to Claim 1, **characterized in that** the boundary region (16) is produced by compressing the filter element (10) between a supporting element (19) and a tubular die (20), and **in that** the agent is applied to the filter element (10) in the compressed state.

3. Method according to one of the preceding claims, **characterized in that** the boundary region (16) is produced by a materially integral connection, in particular a welded connection, between a plurality of layers of the filter element (10).

4. Method according to one of the preceding claims, **characterized in that** the compression is maintained for a predetermined duration upon incorporating the agent.

5. Method according to Claim 2, **characterized in that** the filter element (10) is compressed in an annular manner between the supporting element (19) and the tubular die (20).

6. Method according to one of the preceding claims, **characterized in that** an epilamization agent is used as the agent.

7. Method according to one of the preceding claims, **characterized in that** a compaction region (41), in particular a punctiform compaction region which is disposed so as to be substantially centric, is produced in the filter region (11), said compaction region (41) being enclosed by the boundary region (16) in such a way that, when applying the hydrophobic agent, the agent can render the non-woven filter fabric as well as the supporting layer as well as the spun-bonded non-woven fabric water-repellent due to a sufficient proximity of the non-woven filter fabric (13) to the supporting layer (14), on the one hand, and to the spun-bonded non-woven fabric (15), on the other hand.

8. Method according to one of the preceding claims, **characterized in that** a maximum height (h12) of a void in the filter region (11) between the supporting layer (14) and the non-woven filter fabric (13), and/or a maximum height (h23) of a void in the filter region between the non-woven filter fabric (13) and the spun-bonded non-woven fabric (15), are/is in a range between 0 millimetres and 0.8 millimetres, and are/is preferably approximately 0.6 millimetres.

9. Apparatus (18) for producing a filter device (1) for filtering a hydrophilic liquid, wherein the filter device (1) has a planar filter element (10) which is permeable to liquid, wherein the filter element (10) in a delimited filter region (11) is provided with a hydrophobic agent, **characterized by** a device for generating an annular, compacted boundary region (16) which surrounds the filter region (11), and by an apparatus for applying the agent to the delimited filter region (11).

10. Apparatus according to Claim 9, **characterized in that** the device has a tubular die (20) and a supporting element (19), between which the filter element (10) is able to be disposed and compressed by the die (20) and the supporting element (19) in order to produce the boundary region (16).

11. Apparatus according to one of Claims 9 or 10, **characterized in that** the device is designed to produce a materially integral connection, in particular a welded connection, which extends in an annular manner about the filter region (11).

12. Apparatus according to Claim 10, **characterized in that** the supporting element (19) is designed to be flat, or has a depression (23) in the region of the filter region (11).

## Revendications

1. Procédé de fabrication d'un dispositif formant filtre (1) pour la filtration d'un liquide hydrophile, ayant un élément filtrant plat (10) qui est perméable au liquide, l'élément filtrant (10) présentant une zone de filtration limitée (11) qui est revêtue d'un agent hydrophobe, comprenant les étapes suivantes :
a) prévoir l'élément filtrant plat (10), qui présente en particulier un non-tissé filtrant (13) situé entre une couche de support maillée (14) et un non-tissé filé (15),
b) fabriquer une zone limite annulaire compactée (16) pour la zone de filtration (11),
c) appliquer l'agent sur la zone de filtration (11) de l'élément filtrant (10),
d) obtenir le dispositif formant filtre (1).

2. Procédé selon la revendication 1, **caractérisé en ce que** la zone limite (16) est réalisée par un pressage de l'élément filtrant (10) entre un élément de support (19) et un poinçon tubulaire (20), et **en ce que** l'agent est appliqué à l'état pressé sur l'élément filtrant (10).

3. Procédé selon l'une des revendications précédentes, **caractérisé en ce que** la zone limite (16) est réalisée par une liaison par matière, notamment par soudage, de plusieurs couches de l'élément filtrant (10) entre elles.

4. Procédé selon l'une des revendications précédentes, **caractérisé en ce que** la compression est maintenue pendant une durée prédéterminée après l'introduction de l'agent.

5. Procédé selon la revendication 2 **caractérisé en ce que** l'élément filtrant (10) est pressé de manière annulaire entre l'élément de support (19) et le poinçon tubulaire (20).

6. Procédé selon l'une des revendications précédentes, **caractérisé en ce que** l'on utilise en tant qu'agent un agent d'épilamisation.

7. Procédé selon l'une des revendications précédentes, **caractérisé en ce que**, dans la zone de filtration (11), on réalise une zone de compression (41), en particulier une zone de compression ponctuelle, disposée sensiblement au centre, qui est entourée par la zone limite (16), de sorte que, lors de l'application de l'agent hydrophobe, en raison d'une proximité suffisante du non-tissé filtrant (13) par rapport à la couche de support (14) d'une part et au non-tissé filé (15) d'autre part, l'agent est apte à rendre hydrophobe aussi bien le non-tissé filtrant que la couche de support et le non-tissé filé.

8. Procédé selon l'une des revendications précédentes, **caractérisé en ce qu'**une hauteur maximale (h12) d'un espace libre dans la zone de filtration (11) entre la couche de support (14) et le non-tissé filtrant (13) et/ou une hauteur maximale (h23) d'un espace libre dans la zone de filtration entre le non-tissé filtrant (13) et le non-tissé filé (15) se situent dans une gamme allant de 0 millimètre et 0,8 millimètre et sont de préférence d'environ 0,6 millimètre.

9. Dispositif (18) pour la fabrication d'un dispositif formant filtre (1) pour la filtration d'un liquide hydrophile, le dispositif formant filtre (1) présentant un élément de filtration (10) plat, qui est perméable au liquide, l'élément de filtration (10) étant pourvu d'un agent hydrophobe dans une zone de filtration (11) limitée, **caractérisé par** un dispositif pour la production d'une zone limite (16) annulaire, compactée, entourant la zone de filtration (11), ainsi que par un dispositif pour l'application de l'agent sur la zone de filtration (11) limitée.

10. Dispositif selon la revendication 9, **caractérisé en ce que** le dispositif présente un poinçon (20) tubulaire et un élément d'appui (19) entre lesquels l'élément filtrant (10) est apte à être disposé et est apte à être comprimé par le poinçon (20) et l'élément d'appui (19) pour réaliser la zone limite (16).

11. Dispositif selon l'une des revendications 9 ou 10, **caractérisé en ce que** le dispositif est conçu pour réaliser une liaison par matière, en particulier une liaison soudée, s'étendant de manière annulaire autour de la zone de filtration (11).

12. Dispositif selon la revendication 10 **caractérisé en ce que** l'élément d'appui (19) est plan ou présente un renfoncement (23) dans la zone de la zone de filtration (11).
